# FASCICULE DE BREVET EUROPEEN

(11) **EP 1 499 042 B1**
(45) Date de publication et mention de la délivrance du brevet: **16.08.2006**
(21) Numéro de dépôt: 04291590.0
(22) Date de dépôt: 23.06.2004
(51) Int. Cl.: H04B 10/155, H04L 25/49, H04L 25/497

(54) **Codeur différentiel de signaux électriques**
Differentieller Kodierer für elektrische Signale
Differential encoder for electrical signals

(30) Priorité: 18.07.2003 FR 0308769
(43) Date de publication de la demande: 19.01.2005
(73) Titulaire: ALCATEL, 75008 Paris (FR)
(72) Inventeur: Konczykowska, Agnieszka, 94240 L'Hay les Roses (FR); Godin, Jean, 94100 St-Maur-des-Fosses (FR)
(74) Mandataire: Fournier, Michel Robert Marie

(56) Documents cités:
- US-A1- 2002 196 508
- US-B1- 6 337 756
- US-B1- 6 496 297
- KAISER W ET AL: "REDUCED COMPLEXITY OPTICAL DUOBINARY 10-GB/S TRANSMITTER SETUP RESULTING IN AN INCREASED TRANSMISSION DISTANCE" IEEE PHOTONICS TECHNOLOGY LETTERS, IEEE INC. NEW YORK, US, vol. 13, no. 8, août 2001 (2001-08), pages 884-886, XP001107473 ISSN: 1041-1135

## Description

La présente invention se rapporte au domaine de l'électronique appliquée notamment aux télécommunications optiques et plus précisément porte sur un codeur différentiel de signaux électriques.

On connaît déjà les formats duobinaire, de transmission binaire à profil de phase contrôlée dit PSBT (de l'anglais Phase-Shaped Binary Transmission) ou de modulation de phase différentielle dite DPSK (de l'anglais Differential Phase-Shift Keyed). Ces formats de modulation sont recherchés dans les transmissions de données par voie optique car, en occupant moins de bande passante, ils permettent d'augmenter l'efficacité spectrale, c'est-à-dire le rapport de la fréquence de modulation sur l'espacement fréquentiel entre canaux de transmission voisins et fournissent également de meilleures tolérances à la dispersion chromatique et aux fluctuations de polarisation.

Pour réaliser un signal optique codé suivant l'un de ces formats, on construit préalablement un signal électrique de données précodé.

Le document intitulé « Reduced Complexity Optical Duobinary 10 Gb/s Transmitter Setup Resulting in an Increased Transmission Distance », W. Kaiser et autres, IEE photonics Technology Letters, Vol. 13, n°8, Août 2001, pp884-886 propose un précodeur opérant à un débit de 10 Gbit/s. Ce précodeur comprend principalement deux modules discrets : une porte logique ET classique et une bascule T (T-FF de l'anglais Toggle Flip Flop).

La porte logique ET reçoit un signal d'horloge sinusoïdal à 10 GHz ainsi qu'un signal de données d'entrée à une fréquence bit identique et sous forme d'une séquence de données correspondant à la valeur binaire '0' ou à la valeur binaire '1', en format non retour à zéro (NRZ pour Non Return to Zero en anglais). Cette porte logique ET délivre en sortie un signal destiné à commander la bascule T et semblable au signal d'horloge lorsque la donnée binaire d'entrée correspond à '1' et reste constant lorsque la donnée binaire correspond à '0'.

La bascule T change d'état lorsque le signal de commande correspond à un signal d'horloge, c'est-à-dire quand la donnée d'entrée correspond à la donnée binaire '1'. La bascule T ne change pas d'état lorsque le signal de commande est constant, c'est-à-dire quand la donnée d'entrée correspond à la donnée binaire '0'.

La porte logique ET a une bande passante limitée par sa technologie. A haute fréquence, soit au-delà de 10 GHz, cette porte risque de produire un signal de commande déformé c'est-à-dire d'amplitude trop faible pour être détectée par la bascule T et/ou avec des temps de montée et de descente insuffisamment raides. Aussi, des données peuvent être perdues et le signal précodé être de mauvaise qualité.

En outre, la porte logique suppose un alignement précis de l'horloge et du signal de données d'entrée.

L'invention vise à fournir un codeur différentiel de signaux électriques apte à fournir un signal binaire de données de bonne qualité, même à haut débit tout en étant simple de conception.

A cet effet, l'invention propose un codeur différentiel de signaux électriques comprenant :
- des moyens de commande :
   - aptes à recevoir un signal d'horloge définissant un temps bit et un signal de données binaire d'entrée synchronisé avec le signal d'horloge, le signal de données d'entrée définissant une séquence de premières et de deuxièmes valeurs selon un format non retour à zéro,
   - aptes à fournir un signal de commande, défini par un niveau, dit stable, et par un changement de niveau déclenché lorsque le signal de données d'entrée correspond à la deuxième valeur,
- une bascule T commandée par les moyens de commande et apte à délivrer un signal de données de sortie ayant un niveau bas et un niveau haut et qui est défini par :
   - un même état binaire stabilisé sur deux intervalles de temps bit successifs lorsque le signal de commande se maintient au niveau stable,
   - un changement d'état associé à une commutation de l'un des niveaux bas et haut vers l'autre des niveaux haut et bas et déclenché par ledit changement de niveau,
   **caractérisé en ce que** la bascule T comprend une bascule maître suivie d'une bascule esclave comportant chacune une entrée de commande principale,
   **et en ce que** le codeur différentiel est intégré et lesdits moyens de commande comprennent :
   - un premier circuit, dédié à la bascule maître, conçu pour fournir ledit signal de commande, dit maître, injecté dans l'entrée de commande principale de la bascule maître,
   - un deuxième circuit, dédié à la bascule esclave et commandé par ledit signal d'horloge, conçu pour fournir un signal de commande dit esclave qui est représentatif d'un signal complémentaire du signal d'horloge et injecté dans l'entrée de commande principale de la bascule esclave.

Le codeur différentiel selon l'invention est intégré au sens où les moyens de commande et la bascule T sont rassemblés en un même circuit et sont optimisés l'un par rapport à l'autre. En outre, cette intégration rend possible la différenciation de la commande de la bascule maître et de la commande de la bascule esclave. Ainsi, la bascule esclave reçoit un signal de commande esclave propre et régulier, c'est-à-dire affranchi du bruit des commutations, et d'amplitude suffisante. Ceci garantit un signal de données de sortie sans gigue temporelle et ayant des transitions nettes.

Pendant le changement de niveau, le signal de commande maître est sensiblement en phase avec le signal d'horloge et est sensiblement en opposition de phase avec le signal de commande esclave.

Un tel circuit est simple d'architecture et plus robuste, peut ainsi fonctionner à haut débit. Les moyens de commande selon l'invention tolèrent une marge de phase plus large entre le signal de données d'entrée et le signal d'horloge. En outre l'intégration présente l'avantage de réduire la consommation électrique.

La durée de changement de niveau peut être égale ou avantageusement inférieure au temps bit, tandis qu'avec une porte ET elle est strictement égale à un temps bit. De préférence, cette durée de changement de niveau est choisie sensiblement égale à un demi temps bit.

De préférence, le premier circuit peut être apte à fournir un signal de commande dit maître subsidiaire qui est choisi complémentaire audit signal de commande maître ou constant et injecté dans une entrée de commande subsidiaire de la bascule maître. Et le deuxième circuit peut être apte à fournir un signal de commande dit esclave subsidiaire qui est choisi complémentaire audit signal de commande esclave ou constant et injecté dans une entrée de commande subsidiaire de la bascule esclave.

Dans un mode de réalisation préféré, le premier circuit comprend un comparateur analogique du signal de données d'entrée et du signal d'horloge qui est apte à fournir au moins ledit signal de commande maître.

Dans ce mode préféré, le comparateur analogique peut comprendre une paire différentielle dotée de deux transistors commandés en tension respectivement par le signal d'horloge et le signal de données d'entrée et est apte à fournir un signal de commande dit maître subsidiaire complémentaire audit signal de commande maître et qui est injecté dans une entrée de commande subsidiaire de la bascule maître. Et ladite deuxième valeur est choisie comprise dans la gamme de valeurs du signal d'horloge.

En outre, le premier circuit peut comprendre un étage d'amplification de signaux , en aval du comparateur analogique, et de structure similaire à la structure du comparateur analogique.

De préférence, le codeur différentiel selon l'invention peut être réalisé à base de transistors bipolaires à hétérojonction, transistors particulièrement rapides.

L'invention s'applique également à un codeur choisi parmi les codeurs duobinaires, les codeurs de transmission binaire à profil de phase contrôlée, et les codeurs de modulation de phase différentielle et incluant un précodeur correspondant au codeur différentiel tel que défini précédemment.

Les particularités et avantages de l'invention apparaîtront clairement à la lecture de la description qui suit, faite à titre d'un exemple illustratif et non limitatif et faite en référence aux figures annexées dans lesquelles :
- la figure 1 représente schématiquement un codeur différentiel de signaux électriques intégré, dans un mode de réalisation préféré de l'invention,
- la figure 2 représente schématiquement le premier circuit de la figure 1,
- la figure 3a en relation avec le codeur différentiel décrit en figures 1 et 2, représente schématiquement les profils respectifs en fonction du temps du signal d'horloge et du signal de données d'entrée,
- la figure 3b en relation avec le codeur différentiel décrit en figures 1 et 2, représente schématiquement les profils respectifs en fonction du temps des signaux de commande maître et maître subsidiaire,
- la figure 3c en relation avec le codeur différentiel décrit en figures 1 et 2, représente schématiquement les profils respectifs en fonction du temps des signaux de données binaires de sortie.

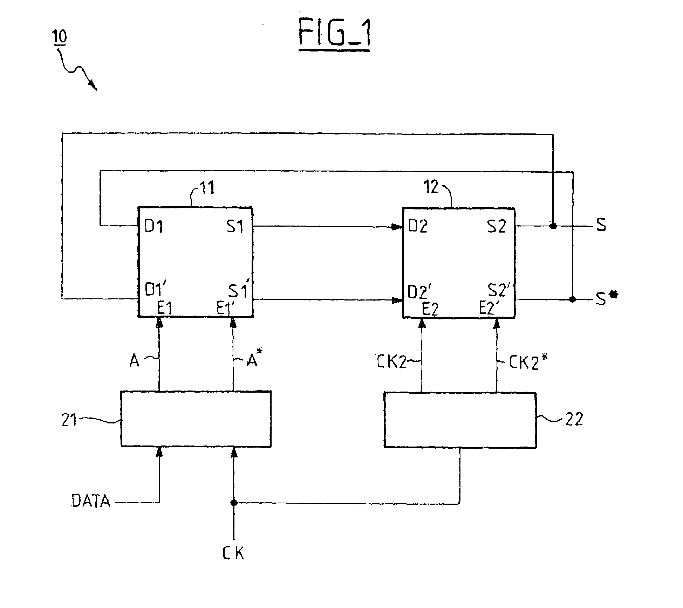

On voit en figure 1 un codeur différentiel 10 de signaux électriques intégré comprenant une bascule T formée d'une bascule maître 11 et d'une bascule esclave 12 ainsi qu'un circuit de commande formé d'une premier circuit 21 et d'un deuxième circuit 22.

Chacune des bascules maître et esclave 11, 12 comprend dans un exemple classique de configuration :
- une entrée locale principale D1, D2 respectivement et une entrée locale subsidiaire D1', D2' respectivement,
- une sortie principale S1, S2 respectivement et une sortie subsidiaire S1', S2' respectivement,
- une entrée de commande principale E1, E2 respectivement et une entrée de commande subsidiaire E1', E2',

L'entrée locale principale D1 de la bascule maître 11 est connectée avec la sortie subsidiaire S2' de la bascule esclave 12 tandis que l'entrée locale subsidiaire D1' de la bascule maître 11 est connectée avec la sortie principale S2 de la bascule esclave 12. En outre, les sorties principale et subsidiaire de la bascule maître 11 sont respectivement reliées aux entrées principale et subsidiaire de la bascule esclave 12.

Dans une variante, le croisement se fait entre les sorties S1, S'1 de la bascule maître 11 et les entrées D2, D2' de la bascule esclave 12.

Les sorties principale et subsidiaire S2, S2' de la bascule esclave 12 délivrent respectivement un signal de données de sortie S et son complémentaire S*, signaux précodés utilisables pour former un signal duobinaire, un signal PSBT ou un signal DPSK.

Le premier circuit 21, dédié à la bascule maître 11 reçoit un signal d'horloge CK et un signal de données d'entrée DATA sensiblement synchronisé avec le signal d'horloge.

Ce premier circuit 21 fournit en sortie un signal de commande dit maître A qui est injecté dans l'entrée de commande principale E1 ainsi qu'un signal de commande dit maître subsidiaire A* complémentaire audit premier signal de commande maître A et qui est injecté dans l'entrée de commande subsidiaire E1'.

Dans une première variante, le circuit 21 est tel qu'il délivre un signal maître subsidiaire A* constant.

Le deuxième circuit 22, dédié à la bascule esclave 12, reçoit le signal d'horloge CK et fournit un signal de commande dite esclave CK2 qui est injecté dans l'entrée de commande principale E2 et qui est représentatif du complémentaire du signal d'horloge et un signal de commande dit esclave subsidiaire CK2* qui est représentatif, par exemple semblable, au signal d'horloge et est injecté dans l'entrée de commande subsidiaire E2' .

Dans la première variante déjà proposée, le circuit 22 est tel qu'il délivre un signal de commande esclave subsidiaire CK2* constant.

Ainsi, le signal de commande esclave CK2 par exemple une sinusoïde et est sensiblement en opposition de phase avec le signal de commande maître A lorsque ce dernier change de niveau.

De même, le signal de commande esclave subsidiaire CK2* est sensiblement en opposition de phase avec le signal de commande maître subsidiaire A* lorsque ce dernier change de niveau.

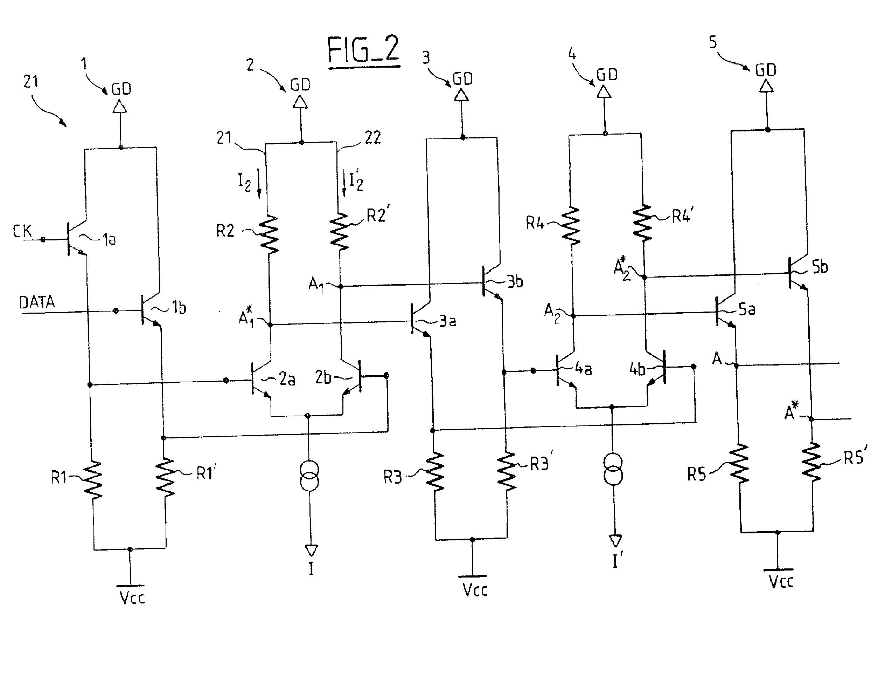

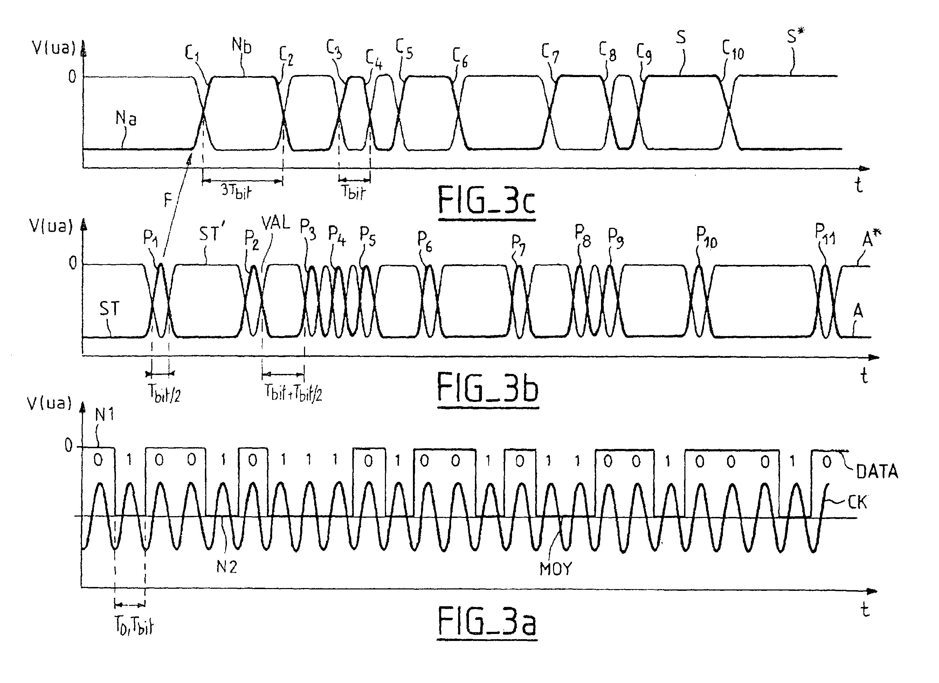

Le fonctionnement du codeur différentiel est illustré en conjonction avec la figure 2 qui détaille un exemple préféré de structure du premier circuit 21 et avec les figures 3a à 3c qui sont des chronogrammes des signaux caractéristiques CK, DATA, A, A*, S, S*.

Le premier circuit 21 comprend successivement :
- un premier étage facultatif d'adaptation d'impédance d'entrée 1,
- un comparateur analogique de signaux 2,
- un deuxième étage facultatif d'adaptation d'impédance intermédiaire 3,
- un étage facultatif d'amplification et de mise en forme de signaux 4,
- et un dernier étage facultatif d'adaptation d'impédance 5.

Chaque étage d'adaptation 1, 3, 5 respectivement est réalisé à partir de transistors par exemple bipolaires à hétérojonction identiques 1 a à 1b, 3a à 3b, 5a à 5b respectivement accouplés à des résistances identiques R1 à R1', R3 à R3', R5 à R5' respectivement pour former des émetteurs suiveurs. Par exemple, chacune des résistances R1 à R5' vaut 100 Ohms environ.

Les collecteurs des transistors 1 a à 1 b, 3a à 3b, 5a à 5b sont reliés à un potentiel stable GND et les résistances R1 à R5' à un autre potentiel stable Vcc.

Le comparateur analogique 2 comprend un premier et un deuxième transistors bipolaires 2a, 2b montés en émetteur commun formant ainsi une paire différentielle, et relié à une source de courant 1, par exemple de 35 mA.

Les collecteurs sont reliés à des première et deuxième résistances identiques de charge R2, R2' respectivement, par exemple égale à 25 Ohms environ. Ces résistances de charge R2, R2' sont également connectées à une tension stable GND sert à polariser cette paire différentielle.

De manière similaire, l'étage d'amplification et de mise en forme de signaux 4 comprend deux transistors bipolaires 4a, 4b montés en émetteur commun et relié à une source de courant l' par exemple de 25 mA formant une deuxième paire différentielle.

Les collecteurs sont reliés à des résistances identiques de charge R4, R4' respectivement, par exemple égale à environ 25 Ohms. Ces résistances de charge R4, R4' sont également connectées à une tension stable GND sert à polariser cette deuxième paire différentielle.

Comme illustré en figure 3a, le signal d'horloge CK est une tension par exemple sous forme sinusoïdale par exemple entre -800 mV et -200 mV, de niveau moyen MOY par exemple égale -500 mV environ, de période T₀, par exemple 25 ps correspondant à une fréquence de 40 GHz.

En outre, on choisit un signal de données d'entrée DATA qui est une tension par exemple impulsionnelle et sous forme de créneaux, de temps bit T_{bit} égal à la période d'horloge T₀ et de préférence relativement synchronisé avec le signal d'horloge CK.

Ce signal de données DATA présente un premier niveau N1 supérieur aux valeurs prises par le signal d'horloge et par exemple égal à 0 mV environ et un deuxième niveau N2 compris entre la valeur minimale et maximale prise par le signal d'horloge CK et de préférence égal au niveau moyen MOY pour un réglage optimal.

Le signal d'horloge CK après passage dans l'un des transistors du premier circuit d'adaptation 1a attaque la base du premier transistor 2a du comparateur 2.

De même, le signal de données d'entrée DATA après passage dans l'autre des transistors du premier circuit d'adaptation 1 b attaque la base du deuxième transistor 2b du comparateur 2. Ainsi, ces signaux CK, DATA commandent en tension la première paire différentielle.

Le signal de données d'entrée DATA définit une séquence de données selon un format non retour à zéro : le premier niveau N1 correspondant par exemple à une donnée ou état logique '0' et le deuxième niveau N2 correspondant par exemple à une donnée ou état logique '1'. La séquence illustré en figure 3a est alors la suivante : 0100101110100101100100010.

Nous appellerons de façon générale I₂ le courant circulant dans une première branche 21 incluant la première résistance de charge R2 et le premier transistor 2a et I2' du comparateur 2 et I'₂ le courant circulant dans une deuxième branche 22 incluant la deuxième résistance de charge R2' et le deuxième transistor 2b du comparateur 2.

De même, nous appellerons tension de sortie intermédiaire A₁ la tension de sortie du comparateur 2 située au niveau du collecteur du deuxième transistor 2b du comparateur 2. et nous appellerons tension de sortie intermédiaire complémentaire A*₁ la tension de sortie complémentaire à A₁ et située au niveau du collecteur du premier transistor 2a du comparateur 2.

Lorsque le signal de données d'entrée DATA prend le premier niveau N1, le signal d'horloge CK étant pendant toute la durée de l'intervalle de temps bit supérieur à ce niveau N1, tout le courant I va circuler dans la première branche 21.

Le courant I₂ est alors sensiblement égal à I tandis que le courant l'₂ est très faible : la tension de sortie intermédiaire A₁ (respectivement A*₁) est forcée (stabilisée) à son niveau minimum (respectivement maximum).

Inversement, lorsque le signal de données DATA prend le deuxième niveau N2, le signal d'horloge CK étant inférieur à ce niveau N2 pendant un demi temps bit le courant I va alors circuler dans la deuxième branche 22.

Pendant cette même durée, la tension de sortie intermédiaire A₁ va passer d'une valeur minimum très faible à une valeur maximum puis revenir à la valeur minimum formant ainsi un pic de largeur à mi-hauteur sensiblement égale à un demi temps bit. Et la tension de sortie intermédiaire complémentaire A*₁ va passer d'une valeur maximum à une valeur minimum puis revenir à la valeur maximum formant ainsi une vallée.

La tension de sortie intermédiaire A₁ après passage dans l'un des transistors 3b du deuxième circuit d'adaptation 3 attaque la base du premier transistor 4a de l'étage d'amplification 4. De même, la tension de sortie intermédiaire complémentaire A*₁ après passage dans l'autre des transistors 3a du deuxième circuit d'adaptation 3 attaque la base du deuxième transistor 4b de l'étage amplificateur 4.

Ainsi, la deuxième paire différentielle fournit en sortie des tensions de sortie dites finales A₂, A^{*}₂ amplifiés et mises en formes et reproduisant le profil des pics et des vallées des tensions de sortie intermédiaires A₁, A*₁.

Ces tensions de sortie finales A₂, A*₂ après passage dans le dernier circuit d'adaptation 5 fournissent ainsi les signaux de commande maître et maître subsidiaire optimisés A, A*, et représentés en figure 3b.

Dans une variante, le premier circuit 21 ne comprend pas de deuxième étage d'amplification ni d'étages d'adaptation 3 et 5 : les signaux A₁ et A*₁ étant alors les signaux de commande de la bascule maître.

Le signal de commande maître A est donc défini par un niveau minimum stable ST par exemple à -500 mV, et par un changement de niveau ou pic P₁ à P₁₁ de largeur à mi-hauteur t₁ sensiblement égale à un demi temps bit et par exemple de valeur maximale égale à 0 mV. Et le signal de commande complémentaire A est défini par un niveau maximum stable ST' et par un changement de niveau ou vallée VAL de largeur à mi-hauteur sensiblement égale à un demi temps bit.

Comme montré en figure 3c, chaque pic P₁ à P₁₁ déclenche (voir flèche F) un changement d'état associé à une commutation de niveaux C₁ à C₁₀ du signal de sortie binaire de données S. Chaque commutation C₁ à C₁₀ est inférieure ou égale à un temps bit et dure par exemple un tiers de temps bit.

Plus précisément, dans cet exemple, on passe d'un état '0' ou '1'à un autre état '1' ou '0' à mi-hauteur du signal.

Dans une alternative (non représentée) si l'un des niveaux est particulièrement affecté par du bruit le changement de niveau peut être réalisé plus près du niveau le moins bruité.

Lorsque le signal de commande A se maintient au niveau stable ST sensiblement sur deux intervalles de temps bits, le signal de sortie binaire S est dans un état binaire stabilisé, par exemple deux '0' successifs, sur deux intervalles de temps bits.

Lorsque le signal de commande A change de niveau, le signal de sortie binaire S change d'état, passant par exemple de '0' à '1'.

Le signal de données de sortie S présente un niveau bas Na par exemple à -500 mV environ et un niveau haut Nb par exemple à 0 mV environ.

De manière analogue, chaque vallée VAL déclenche un changement d'état associé à une commutation du signal de sortie de données binaire complémentaire S*.

Bien entendu, la description qui précède a été donnée à titre purement illustratif. On pourra sans sortir du cadre de l'invention remplacer tout moyen par un moyen équivalent.

## Revendications

1. Codeur différentiel (10) de signaux électriques comprenant :
- des moyens de commande (21, 22) :
- aptes à recevoir un signal d'horloge (CK) définissant un temps bit et un signal de données binaire d'entrée (DATA) synchronisé avec le signal d'horloge, le signal de données d'entrée définissant une séquence de premières et de deuxièmes valeurs (N1, N2) selon un format non retour à zéro,
- aptes à fournir un signal de commande (A), défini par un niveau (ST), dit stable, et par un changement de niveau (P₁ à P₁₁) déclenché lorsque le signal de données d'entrée correspond à la deuxième valeur,
- une bascule T commandée par les moyens de commande et apte à délivrer un signal de données binaires de sortie (S, S*) ayant un niveau bas (Na) et un niveau haut (Nb) et qui est défini par :
- un même état binaire ('0', '1') sur deux intervalles de temps bits successifs et lorsque le signal de commande se maintient au niveau stable,
- un changement d'état associé à une commutation (C₁ à C₁₀) de l'un des niveaux bas et haut vers l'autre des niveaux haut et bas et déclenché par ledit changement de niveau,
**caractérisé en ce que** la bascule T comprend une bascule maître (11) suivie d'une bascule esclave (12) comportant chacune une entrée de commande principale (E1, E2),
**et en ce que** le codeur différentiel est intégré et lesdits moyens de commande comprennent :
- un premier circuit (21), dédié à la bascule maître, conçu pour fournir ledit signal de commande (A), dit maître, injecté dans l'entrée de commande principale de la bascule maître,
- un deuxième circuit (22), dédié à la bascule esclave et commandé par ledit signal d'horloge (CK), conçu pour fournir un signal de commande, dit esclave (CK2), qui est représentatif d'un signal complémentaire du signal d'horloge et injecté dans l'entrée de commande principale de la bascule esclave.

2. Codeur différentiel (10) de signaux électriques selon la revendication 1 **caractérisé en ce que** la durée de changement de niveau est inférieure ou égale au temps bit et de préférence égale à un demi temps bit.

3. Codeur différentiel (10) de signaux électriques selon l'une des revendications 1 ou 2 **caractérisé en ce que** le premier circuit (21) est apte à fournir un signal de commande dit maître subsidiaire (A*) qui est choisi complémentaire audit signal de commande maître ou constant et est injecté dans une entrée de commande subsidiaire (E1') de la bascule maître, et **en ce que** le deuxième circuit (22) est apte à fournir un signal de commande dit esclave subsidiaire qui est choisi complémentaire audit signal de commande esclave (CK2*) ou constant et est injecté dans une entrée de commande subsidiaire (E2') de la bascule esclave.

4. Codeur différentiel (10) de signaux électriques selon l'une des revendications 1 à 3 **caractérisé en ce que** le premier circuit (21) comprend un comparateur analogique (2) du signal de données d'entrée (DATA) et du signal d'horloge (CK) qui est apte à fournir au moins ledit signal de commande maître (A).

5. Codeur différentiel (10) de signaux électriques selon la revendication 4 **caractérisé en ce que** le comparateur analogique (2) comprend une paire différentielle dotée de deux transistors (2a,2b) commandés en tension respectivement par le signal d'horloge (CK) et le signal de données d'entrée (DATA) et est apte à fournir un signal de commande dit maître subsidiaire (A*) complémentaire audit signal de commande maître et qui est injecté dans une entrée de commande subsidiaire (E1') de la bascule maître et **en ce que** ladite deuxième valeur (N2) est choisie comprise dans la gamme de valeurs du signal d'horloge (CK).

6. Codeur différentiel (10) de signaux électriques selon l'une des revendications 4 ou 5 **caractérisé en ce que** le premier circuit (21) comprend un étage d'amplification (3) de signaux en aval du comparateur analogique (2) et de structure similaire à la structure du comparateur analogique.

7. Codeur différentiel (10) de signaux électriques selon l'une des revendications 1 à 6 **caractérisé en ce qu'**il est réalisé à base de transistors bipolaires à hétérojonction (2a à 4b).

8. Codeur différentiel (10) de signaux électriques choisi parmi les codeurs duobinaires, les codeurs de transmission binaire à profil de phase contrôlée, et les codeurs de modulation de phase différentielle et incluant un précodeur correspondant au codeur différentiel défini selon l'une des revendications 1 à 7.

## Claims

1. A differential coder (10) for electrical signals, comprising:
- control means (21, 22) adapted:
- to receive a clock signal (CK) defining a bit time and an input binary data signal (DATA) synchronized with the clock signal and defining a sequence of first and second values (N1, N2) in a non return to zero format, and
- to supply a control signal (A) defined by a level, referred to as a stable level (ST), and by a change of level (P₁ to P₁₁) that is triggered when the input data signal corresponds to the second value, and
- a bistable T controlled by the control means and adapted to supply an output binary data signal (S, S*) having a low level (Na) and a high level (Nb), and which is defined by:
- the same binary state ('0', '1') over two successive bit times when the control signal is maintained at a stable level, and
- a change of state associated with a change (C₁ to C₁₀) from one of the low and high levels to the other of the high and low levels and triggered by said change of level,
which coder is **characterized in that** the bistable T comprises a master bistable (11) followed by a slave bistable (12) each having a main control input (E1,E2),
and **in that** the differential coder is integrated and said control means comprise:
- a first circuit (21) dedicated to the master bistable and designed to supply said control signal (A), referred to as a master signal, which is injected into the main control input of the master bistable, and
- a second circuit (22) dedicated to the slave bistable, controlled by said clock signal (CK) and designed to supply a control signal, referred to as a slave control signal (CK2), that is representative of a signal complementary to the clock signal and that is injected into the main control input of the slave bistable.

2. A differential electrical signal coder (10) according to claim 1, **characterized in that** the duration of the change of level is less than or equal to the bit time and preferably equal to half a bit time.

3. A differential electrical signal coder (10) according to claim 1 or claim 2, **characterized in that** the first circuit (21) is adapted to supply a control signal, referred to as a subsidiary master control signal (A*), that is selected to be complementary to said master control signal or constant and that is injected into a subsidiary control input (E1') of the master bistable, and **in that** the second circuit (22) is adapted to supply a control signal, referred to as a subsidiary slave control signal, that is selected to be complementary to said slave control signal (CK2*) or constant and that is injected into a subsidiary control input (E2') of the slave bistable.

4. A differential electrical signal coder (10) according to any one of claims 1 to 3, **characterized in that** the first circuit (21) comprises an analogue comparator (2) for comparing the input data signal (DATA) and the dock signal (CK) and adapted to supply at least said master control signal (A).

5. A differential electrical signal coder (10) according to claim 4, **characterized in that** the analogue comparator (2) comprises a differential pair having two transistors (2a, 2b) voltage-controlled respectively by the clock signal (CK) and by the input data signal (DATA), and is adapted to supply a control signal, referred to as a subsidiary master control signal (A*), that is complementary to said master control signal and that is injected into a subsidiary control input (E1') of the master bistable and **in that** said second value (N2) is selected from the range of values of the clock signal (CK).

6. A differential electrical signal coder (10) according to claim 4 or claim 5, **characterized in that** the first circuit (21) comprises a signal amplification stage (3) downstream of the analogue comparator (2) and of structure similar to the structure of the analogue comparator.

7. A differential electrical signal coder (10) according to any one of claims 1 to 6, **characterized in that** it is based on heterojunction bipolar transistors (2a to 4b).

8. A differential electrical signal coder (10) selected from duobinary coders, phase-shaped binary transmission coders and differential phase-shift keyed coders including a precoder corresponding to the differential coder according to any one of claims 1 to 7.

## Patentansprüche

1. Differentieller Kodierer (10) für elektrische Signale, beinhaltend
- Steuerungsmittel (21, 22),
- die geeignet sind, ein Clocksignal (CK), das eine Bitdauer definiert, und ein mit dem Clocksignal synchronisiertes binäres Eingangsdatensignal (DATA) zu empfangen, wobei das Eingangsdatensignal eine Sequenz von ersten und zweiten Werten (N1, N2) in einem Non-Return-to-Zero-Format definiert,
- und die geeignet sind, ein Steuersignal (A) zu liefern, das durch einen als stabil bezeichneten Pegel (ST) und eine Pegeländerung (von P₁ auf P₁₁) definiert ist, die ausgelöst wird, wenn das Eingangsdatensignal dem zweiten Wert entspricht,
- ein T-Flipflop, das von den Steuerungsmitteln angesteuert wird und geeignet ist, ein binäres Ausgangsdatensignal (S, S*) mit einem Low-Pegel (Na) und einem High-Pegel (Nb) zu liefern, das definiert ist durch
- einen über zwei aufeinanderfolgende Bitdauerintervalle identischen Binärzustand ('0', '1'), und, wenn das Steuersignal auf dem stabilen Pegel verbleibt,
- eine Pegeländerung, die einer Umschaltung (von C₁ auf C₁₀) eines der Low- und High-Pegel auf den jeweils anderen High- und Low-Pegel zugeordnet ist und durch besagte Pegeländerung ausgelöst wird,
**dadurch gekennzeichnet, daß** das T-Flipflop ein Master-Flipflop (11), gefolgt von einem Slave-Flipflop (12), beinhaltet, die jeweils einen Hauptsteuereingang (E1, E2) beinhalten,
**sowie dadurch**, **daß** der differentielle Kodierer integriert ist und besagte Steuerungsmittel
- eine erste Schaltung (21), die dem Master-Flipflop zugewiesen und dafür ausgelegt ist, besagtes als Master-Signal bezeichnetes Steuersignal (A) zu liefern, das dem Hauptsteuereingang des Master-Flipflops zugeführt wird, sowie
- eine zweite Schaltung (22), die dem Slave-Flipflop zugewiesen ist, von besagtem Clocksignal (CK) gesteuert wird und dafür ausgelegt ist, ein als Slave-Signal (CK2) bezeichnetes Steuersignal zu liefern, das ein zum Clocksignal komplementäres Signal bildet und dem Hauptsteuereingang des Slave-Flipflops zugeführt wird, beinhalten.

2. Differentieller Kodierer (10) für elektrische Signale gemäß Anspruch 1, **dadurch gekennzeichnet, daß** die Zeitspanne der Pegeländerung kleiner als oder ebenso groß wie die Bitdauer und vorzugsweise gleich der halben Bitdauer ist.

3. Differentieller Kodierer (10) für elektrische Signale gemäß einem der Ansprüche 1 oder 2, **dadurch gekennzeichnet, daß** die erste Schaltung (21) geeignet ist, ein als Master-Zusatzsignal (A*) bezeichnetes Steuersignal zu liefern, das komplementär zu besagtem Master-Steuersignal oder konstant gewählt, und einem Zusatz-Steuereingang (E1') des Master-Flipflops zugeführt wird, sowie **dadurch**, daß die zweite Schaltung (22) geeignet ist, ein als Slave-Zusatzsignal bezeichnetes Steuersignal zu liefern, das komplementär zu besagtem Slave-Steuersignal (CK2*) oder konstant gewählt und einem Zusatz-Steuereingang (E2') des Slave-Flipflops zugeführt wird.

4. Differentieller Kodierer (10) für elektrische Signale gemäß einem der Ansprüche 1 bis 3, **dadurch gekennzeichnet, daß** die erste Schaltung (21) einen analogen Komparator (2) für das Eingangsdatensignal (DATA) und das Clocksignal (CK) beinhaltet, der geeignet ist, zumindest besagtes Master-Steuersignal (A) zu liefern.

5. Differentieller Kodierer (10) für elektrische Signale gemäß Anspruch 4, **dadurch gekennzeichnet**e daß der analoge Komparator (2) ein differentielles Paar beinhaltet, das aus zwei Transistoren (2a, 2b) besteht, die vom Clocksignal (CK) beziehungsweise vom Eingangsdatensignal (DATA) spannungsgesteuert werden, und das geeignet ist, ein Steuersignal zu liefern, das als zum besagten Master-Steuersignal komplementäres Master-Zusatzsignal (A*) bezeichnet und einem Zusatz-Steuereingang (E1') des Master-Flipflops zugeführt wird, sowie **dadurch**, daß der besagte zweite Wert (N2) so gewählt wird, daß er im Wertebereich des Clocksignals (CK) liegt.

6. Differentieller Kodierer (10) für elektrische Signale gemäß einem der Ansprüche 4 oder 5, **dadurch gekennzeichnet, daß** die erste Schaltung (21) eine Signalverstärkungsstufe (3) beinhaltet, die im Signalweg hinter dem analogen Komparator (2) liegt und in seiner Struktur der Struktur des analogen Komparators ähnelt.

7. Differentieller Kodierer (10) für elektrische Signale gemäß einem der Ansprüche 1 bis 6, **dadurch gekennzeichnet, daß** dieser auf der Basis von Heteroübergangs-Bipolartransistoren (2a bis 4b) realisiert ist.

8. Differentieller Kodierer (10) für elektrische Signale, ausgewählt aus Duobinär-Kodierern, binären Sendekodierern mit phasengeregeltem Profil und Phasendifferenz-Modulationskodierern und beinhaltend einen Vorkodierer entsprechend dem gemäß einem der Ansprüche 1 bis 7 definierten differentiellen Kodierer.
